# EUROPEAN PATENT APPLICATION

(11) **EP 3 395 915 A1**
(43) Date of publication of application: **31.10.2018**
(21) Application number: 16877965.0
(22) Date of filing: 14.12.2016
(51) Int. Cl.: C09D 133/04, C08J 7/04, C09D 133/24

(54) **COATING AGENT**

(30) Priority: 21.12.2015 JP 2015248224
(71) Applicant: Nippon Soda Co., Ltd., Tokyo 100-8165 (JP)
(72) Inventor: YAMATE, Taiki, Ichihara-shi Chiba 290-0045 (JP)
(74) Representative: Wibbelmann, Jobst
(86) International application number: PCT/JP2016/005129
(87) International publication number: WO 2017/110060

(57) **Abstract**

There is provided a coating agent that may form a base film having excellent adhesiveness to a substrate of a plastic such as a cycloolefin resin and having transparency and a high refractive index. A coating agent comprising a polymer consisting of only a repeating unit derived from a monomer represented by formula (I) (wherein Ar represents a C6 to C10 aryl group optionally having a substituent and Ar is the same or different; X represents an oxygen atom or -NR-; R represents a hydrogen atom or a C1 to C6 alkyl group; and Y represents a polymerizable functional group.)

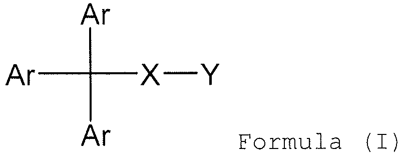

## Description

### Technical Field

The present invention relates to a novel coating agent, particularly a coating agent having excellent adhesiveness to a plastic substrate.

This application claims priority to Japanese Patent Application No. 2015-248224 filed on December 21, 2015, the contents of which are incorporated herein.

### Background Art

It is known that a three-dimensional polymer obtained by radical-polymerizing a compound comprising at least one compound represented by formula (1): 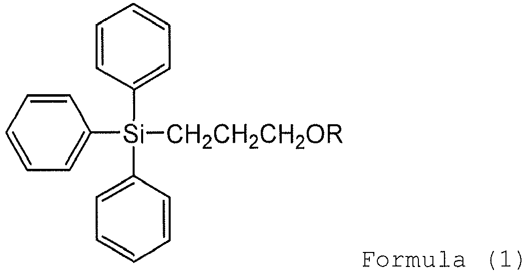 (wherein R represents an acryloyl group, a methacryloyl group, an allyloxycarbonyl group, or an allyl group), as a monomer, is a polymer having excellent heat resistance, light resistance, and transparency, and is used as an optical plastic material. (see Patent Documents 1 and 2)

A cured product obtained by photopolymerizing a polymerizable compound characterized by being represented by the following formula (2): 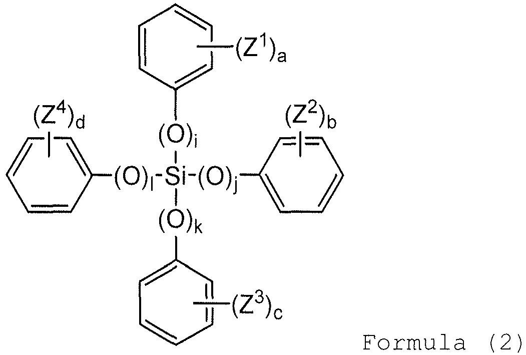 (wherein the substituents Z¹ to Z⁴ of the four phenyl groups each independently represent a substituent represented by the following formula (3); a, b, c, and d each independently represent 0 to 3, and their sum, (a + b + c + d), is 1 to 4, the four phenyl groups each independently have the remaining hydrogen atoms as they are, or some or all of remaining hydrogen atoms are substituted by a methyl group, a methoxy group, a fluorine atom, a trifluoromethyl group, or a trifluoromethoxy group; and i, j, k, and 1 each independently represent 0 or 1) 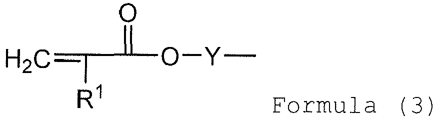 (wherein R¹ represents a hydrogen atom or a methyl group; and Y represents a single bond, an alkylene group having 1 to 12 carbon atoms, an alkylene group wherein some or all hydrogen atoms are substituted by fluorine atoms and having 1 to 12 carbon atoms, an alkylene group having an oxygen atom at the terminal on the phenyl group side and having 1 to 12 carbon atoms, or an alkylene group having an oxygen atom at the terminal on the phenyl group side, and wherein some or all hydrogen atoms are substituted by fluorine atoms, and having 1 to 12 carbon atoms) is known to be used as an optical element. (see Patent Document 3)

### Prior Art Documents

### Patent Documents

Patent Document 1: Japanese unexamined Patent Application Publication No. 63-145310
Patent Document 2: Japanese unexamined Patent Application Publication No. 63-145287
Patent Document 3: WO2009/139476

### Summary of the Invention

### Object to be Solved by the Invention

However, examples in which these polymerizable compounds are used for applications other than optical plastic substrates are unknown.

On the other hand, cycloolefin resins are widely used as optical lenses, optical components, or medical use, but primer layers for their surface modification having excellent adhesiveness are unknown.

It is an object of the present invention to provide a coating agent that may form a base film having excellent adhesiveness to a substrate of a plastic such as a cycloolefin resin and having transparency and a high refractive index.

### Means to Solve the Object

The present inventor has studied diligently in order to achieve the above object, and as a result found that a polymer of a monomer represented by formula (I) forms a base film having excellent adhesiveness on a substrate of a plastic such as a cycloolefin resin, leading to the completion of the present invention.

Specifically, the present invention relates to
(1) a coating agent comprising a polymer consisting of only a repeating unit derived from a monomer represented by formula (I): 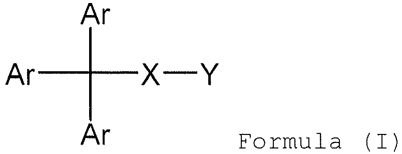 (wherein Ar represents a C6 to C10 aryl group optionally having a substituent and Ar is the same or different; X represents an oxygen atom or -NR-; R represents a hydrogen atom or a C1 to C6 alkyl group; and Y represents a polymerizable functional group),
(2) a coating agent comprising a homopolymer having a repeating unit derived from a monomer represented by formula (I): 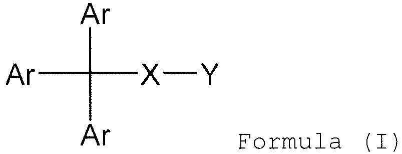 (wherein Ar represents a C6 to C10 aryl group optionally having a substituent and Ar is the same or different; X represents an oxygen atom or -NR-; R represents a hydrogen atom or a C1 to C6 alkyl group; and Y represents a polymerizable functional group),
(3) the coating agent according to (1) or (2), wherein in formula (I), Y is an acryloyl group or a methacryloyl group,
(4) the coating agent according to any one of (1) to (3), wherein the coating agent is a coating agent onto a plastic substrate, and
(5) the coating agent according to (4), wherein the plastic substrate is a polyolefin resin substrate.

### Effect of the Invention

By using the coating agent of the present invention, a film (coating film) having excellent adhesiveness to a plastic substrate, particularly a substrate of a plastic such as a cycloolefin resin, and having a high refractive index may be formed. A functional film that may not be conventionally directly formed on a plastic substrate may be laminated via the coating film of the present invention.

### Mode of Carrying Out the Invention

### 1. Coating Agent

### [Monomer Represented by Formula (I)]

The coating agent of the present invention comprises a polymer having a repeating unit derived from a monomer represented by formula (I) (sometimes referred to as a "polymer (I)").

In the formula, Ar represents a C6 to C10 aryl group optionally having a substituent.

As the C6 to C10 aryl group, specifically, a phenyl group, a naphthyl group, a tetrahydronaphthyl group, or the like is exemplified.

As the "substituent" in "optionally having a substituent", specifically, a halogeno group, a hydroxyl group, a C1 to C6 alkyl group, a C1 to C6 alkoxy group, a C1 to C6 alkylthio group, a C6 to C10 aryl group, and a C6 to C10 aryloxy group are exemplified.

As the halogeno group, specifically, a fluoro group, a chloro group, a bromo group, and an iodo group are exemplified.

As the C1 to C6 alkyl group, specifically, a methyl group, an ethyl group, a n-propyl group, an i-propyl group, a n-butyl group, a s-butyl group, an i-butyl group, a t-butyl group, a n-pentyl group, a n-hexyl group, or the like is exemplified.

As the C1 to C6 alkoxy group, specifically, a methoxy group, an ethoxy group, a n-propoxy group, an i-propoxy group, a n-butoxy group, a s-butoxy group, an i-butoxy group, a t-butoxy group, a n-pentoxy group, a n-hexoxy group, or the like is exemplified.

As the C1 to C6 alkylthio group, specifically, a methylthio group, an ethylthio group, a n-propylthio group, an i-propylthio group, a n-butylthio group, a s-butylthio group, an i-butylthio group, a t-butylthio group, a n-pentylthio group, a n-hexylthio group, or the like is exemplified.

As the C6 to C10 aryl group, specifically, a phenyl group, a naphthyl group, or the like is exemplified.

As the C6 to C10 aryloxy group, specifically, a phenoxy group, a naphthoxy group, or the like is exemplified.

X represents an oxygen atom or -NR-. R represents a hydrogen atom or a C1 to C6 alkyl group, and as the C1 to C6 alkyl group, the same group as the C1 to C6 alkyl group exemplified as the "substituent" in "optionally having a substituent" is exemplified.

In the formula, Y represents a polymerizable functional group. As the polymerizable functional group, an acryloyl group, a methacryloyl group, a vinyloxycarbonyl group, a prop-1-en-2-yloxycarbonyl group, an allyloxycarbonyl group, a vinyl group, an allyl group, and a glycidyl group are exemplified.

Among monomers represented by formula (I) used in the present invention, preferably trityl acrylate and trityl methacrylate are exemplified.

### [Polymer (I)]

The polymer (I) used in the present invention may be used without particular limitation as long as it is a polymer obtained by polymerizing the monomer represented by formula (I). The polymer (I) may be a polymer obtained by polymerizing one type of monomer, or a polymer obtained by polymerizing two or more types of monomers. Particularly, the polymer (I) is preferably a homopolymer obtained by polymerizing one type of monomer represented by formula (I). The polymerization reaction is not particularly limited, and may be a known method for synthesizing a polyacrylate, and, for example, radical polymerization, anionic polymerization, or the like may be exemplified. The molecular weight of the polymer (I) used is not limited as long as it is in a range in which application onto a substrate is possible. For example, a polymer having a number average molecular weight in the range of 10,000 to 100,000 may be exemplified.

### [Other Components]

### (Organic Solvent)

An organic solvent may be comprised in the coating agent of the present invention. As a typical organic solvent that may be used, an ether-based organic solvent, an ester-based organic solvent, an aliphatic hydrocarbon-based organic solvent, an aromatic hydrocarbon-based organic solvent, a ketone-based organic solvent, an organohalide-based organic solvent, or the like is exemplified.

As the ether-based organic solvent, diethyl ether, dipropyl ether, dibutyl ether, diamyl ether, or the like is exemplified; as the ester-based organic solvent, ethyl acetate, propyl acetate, butyl acetate, amyl acetate, heptyl acetate, ethyl butyrate, isoamyl isovalerate, or the like is exemplified; as the aliphatic hydrocarbon-based organic solvent, normal hexane, normal heptane, cyclohexane, or the like is exemplified; as the aromatic hydrocarbon-based organic solvent, toluene, xylene, or the like is exemplified; as the ketone-based organic solvent, methyl ethyl ketone, methyl isobutyl ketone, cyclohexanone, or the like is exemplified; and as the organohalide-based organic solvent, trichloroethane, trichloroethylene, or the like is exemplified. Further, a relatively inactive organic solvent such as propylene glycol monomethyl ether or propylene glycol monoethyl ether may also be used.

Especially, an ester-based organic solvent such as propyl acetate, butyl acetate, isoamyl acetate, heptyl acetate, ethyl butyrate, or isoamyl isovalerate having volatility is preferred considering that the present invention is often used in an open system in a natural environment.

### (Condensate of Organosilane Compound)

A condensate of an organosilane compound may be comprised in the coating agent of the present invention for the purpose of laminating an organic-inorganic composite film. Thus, a coating film having good adhesiveness to a substrate may be formed.

The condensate of the organosilane compound may be produced with an organosilane compound represented by formula (A) using a known silanol condensation method.

R⁴Si(R³)₃ (A)

wherein R⁴ represents a C1 to C30 alkyl group, a C2 to C8 alkenyl group, or a C6 to C10 aryl group that may be substituted by an epoxy group, a glycidyloxy group, or a (meth)acryloxy group; and R³ represents a hydroxyl group or a hydrolyzable group.

As the C1 to C30 alkyl group for R⁴, a methyl group, an ethyl group, a n-propyl group, an isopropyl group, a n-butyl group, an isobutyl group, a s-butyl group, a t-butyl group, a n-pentyl group, an isopentyl group, a neopentyl group, a 2-methylbutyl group, a 2,2-dimethylpropyl group, a n-hexyl group, an isohexyl group, a n-heptyl group, a n-octyl group, a nonyl group, an isononyl group, a decyl group, a lauryl group, a tridecyl group, a myristyl group, a pentadecyl group, a palmityl group, a heptadecyl group, a stearyl group, or the like is exemplified.

As the C2 to C8 alkenyl group, a vinyl group, an allyl group, a 2-propenyl group, or the like is exemplified.

As the C6 to C10 aryl group, a phenyl group, a naphthyl group, or the like is exemplified.

The hydrolyzable group of R³ means a group that may be hydrolyzed by heating at 25°C to 100°C under catalyst-free conditions or in the coexistence of excess water to produce a silanol group, or a group that may form a siloxane condensate. Specifically, an alkoxy group, an acyloxy group, a halogeno group, an isocyanate group, or the like may be exemplified, and a C1 to C4 alkoxy group or a C1 to C6 acyloxy group is preferred.

Here, as the C1 to C4 alkoxy group, a methoxy group, an ethoxy group, a n-propoxy group, an isopropoxy group, a n-butoxy group, an isobutoxy group, a t-butoxy group, or the like is exemplified, and as the C1 to C6 acyloxy group, an acetyloxy group, a benzoyloxy group, or the like is exemplified. As the halogeno group, a fluoro group, a chloro group, a bromo group, an iodo group, or the like is exemplified.

As the organosilane compound represented by formula (A), specifically, vinyltrichlorosilane, vinyltrimethoxysilane, vinyltriethoxysilane, vinyltributoxysilane, vinyltriisopropoxysilane, allyltrimethoxysilane, 3-butenyltrimethoxysilane, divinyldichlorosilane, divinyldiacetoxysilane, divinyldimethoxysilane, diallyldimethoxysilane, di-3-butenyldimethoxysilane, vinylmethyldimethoxysilane, vinylethyldiethoxysilane, methyltri(meth)acryloxysilane, methyltris[2-(meth)acryloxyethoxy]silane, methyltriglycidyloxysilane, methyltris(3-methyl-3-oxetanemethoxy)silane, methyltrichlorosilane, methyltrimethoxysilane, methyltriethoxysilane, methyltributoxysilane, ethyltrimethoxysilane, ethyltriisopropoxysilane, ethyltri(n-butoxy)silane, n-butyltrimethoxysilane, dimethyldichlorosilane, dimethyldiacetoxysilane, dimethyldimethoxysilane, di-n-butyldimethoxysilane, 2-cyclopropenyltrimethoxysilane, 2-cyclopentenyltrimethoxysilane, trifluoromethyltrimethoxysilane, phenyltrimethoxysilane, diphenyldimethoxysilane, pentafluorophenyltrimethoxysilane, 4-oxacyclohexyltrimethoxysilane, 2-(3,4-epoxycyclohexyl)ethyltrimethoxysilane, 3-glycidyloxy-n-propylmethyldiethoxysilane, 3-glycidyloxy-n-propyltrimethoxysilane, 3-glycidyloxy-n-propyltriethoxysilane, 3-methacryloxy-n-propylmethyldimethoxysilane, 3-methacryloxy-n-propyltrimethoxysilane, 3-methacryloxy-n-propylmethyldiethoxysilane, 3-methacryloxy-n-propyltriethoxysilane, 3-acryloxy-n-propyltrimethoxysilane, or the like is exemplified.

For the known silanol condensation method, specifically a method using a silanol condensation catalyst may be exemplified. The silanol condensation catalyst is not particularly limited as long as the hydrolyzable group in the compound represented by formula (A) is hydrolyzed, and the silanol is condensed to form a siloxane bond. An organic metal, an organic acid metal salt, a metal hydroxide, an acid, a base, a metal complex, a hydrolysate thereof, a condensate thereof, or the like is exemplified. The silanol condensation catalyst may be used alone or used by combination of two or more thereof.

As the organic metal, specifically, an alkyl metal compound such as tetramethyltitanium or tetrapropylzirconium; a metal alcoholate such as tetraisopropoxytitanium or tetrabutoxyzirconium; or the like is exemplified.

The organic acid metal salt is a compound consisting of a salt obtained from a metal ion and an organic acid, and as the organic acid, an organic compound that exhibits acidity, such as a carboxylic acid such as acetic acid, oxalic acid, tartaric acid, or benzoic acid; a sulfur-containing organic acid such as sulfonic acid or sulfinic acid; a phenol compound; an enol compound; an oxime compound; an imide compound; or an aromatic sulfonamide is exemplified. Specifically, a metal carboxylate, a metal sulfonate, a phenol metal salt, or the like is exemplified.

The metal hydroxide is a metal compound having a hydroxide ion as an anion.

The metal complex is preferably a metal complex having a hydroxyl group or a hydrolyzable group, and more preferably a metal complex having two or more hydroxyl groups or hydrolyzable groups. Having two or more hydroxyl groups or hydrolyzable groups means that the total of hydrolyzable groups and hydroxyl groups is two or more. As the hydrolyzable group, an alkoxy group, an acyloxy group, a halogen group, and an isocyanate group are exemplified, and a C1 to C4 alkoxy group and a C1 to C4 acyloxy group are preferred.

As the above metal complex, a β-ketocarbonyl compound, a β-ketoester compound, and an α-hydroxyester compound are preferred, and specifically a compound in which a β-ketoester such as methyl acetoacetate, n-propyl acetoacetate, isopropyl acetoacetate, n-butyl acetoacetate, sec-butyl acetoacetate, or t-butyl acetoacetate; a β-diketone such as acetylacetone, hexane-2,4-dione, heptane-2,4-dione, heptane-3,5-dione, octane-2,4-dione, nonane-2,4-dione, or 5-methyl-hexane-2,4-dione; a hydroxycarboxylic acid such as glycolic acid or lactic acid; or the like is coordinated is exemplified.

As the metals in these organic metal, organic acid metal salt, metal hydroxide, and metal complex, titanium (Ti), zirconium (Zr), aluminum (Al), silicon (Si), germanium (Ge), indium (In), tin (Sn), tantalum (Ta), zinc (Zn), tungsten (W), lead (Pb), or the like is exemplified, and among these, titanium (Ti), zirconium (Zr), aluminum (Al), and tin (Sn) are preferred, and particularly titanium (Ti) is preferred. These may be used alone or may be used by combination of two or more thereof.

As the acid, an organic acid and a mineral acid are exemplified. As the organic acid, acetic acid, formic acid, oxalic acid, carbonic acid, phthalic acid, trifluoroacetic acid, p-toluenesulfonic acid, methanesulfonic acid, or the like is exemplified, and as the mineral acid, hydrochloric acid, nitric acid, boric acid, hydrofluoboric acid, or the like is exemplified.

Here, a photo-acid-generating agent that generates an acid by light irradiation, specifically, diphenyliodonium hexafluorophosphate, triphenylphosphonium hexafluorophosphate, and the like, is also included in the acid.

As the base, a strong base such as tetramethylguanidine or tetramethylguanidylpropyltrimethoxysilane; an organic amine, a carboxylic acid-neutralized salt of an organic amine, a quaternary ammonium salt, or the like is exemplified.

The blending ratio of the silanol condensation catalyst is 1:99 to 99:1, and preferably 1:99 to 50:50, with respect to the mass of the organosilane compound.

### (Metal Compound and the Like)

A metal compound may be added to the coating agent of the present invention for the purpose of increasing the refractive index and hardness of the formed coating film. As the metal compound, the above-described organosilane compound, and the organic metal, the organic acid metal salt, the metal hydroxide, and the metal chelate compound exemplified as the silanol condensation catalyst are exemplified. As a metal compound other than these, a metal oxide is exemplified, and specifically, particles of a metal oxide that is silicon dioxide, titanium oxide, aluminum oxide, chromium oxide, manganese oxide, iron oxide, zirconium oxide (zirconia), or cobalt oxide, or the like are exemplified. Particularly zirconium oxide is preferred.

As the shape of the particles, a spherical form, a porous powder form, a scaly form, a fibrous form, or the like is exemplified, and the shape of the particles is more preferably a porous powder form.

As the metal oxide particles of the present invention, colloidal metal oxide particles may also be used. Specifically, colloidal silica and colloidal zirconium may be exemplified, and water-dispersed colloidal metal oxide particles or colloidal metal oxide particles dispersed in an organic solvent such as methanol or isopropanol may be exemplified.

For the coloration of the coating film, film thickening, the prevention of the transmission of ultraviolet rays to the base, the provision of anticorrosiveness, and the development of properties such as heat resistance, a filler may also be separately added and dispersed. As the filler, a water-insoluble pigment such as an organic pigment or an inorganic pigment, a particulate, fibrous, or scaly metal and alloy and oxide, hydroxide, carbide, nitride, and sulfide thereof other than a pigment, or the like are exemplified.

In addition, additives such as a known dehydrating agent such as methyl orthoformate, methyl orthoacetate, or tetraethoxysilane, various surfactants, and a silane coupling agent, a titanium coupling agent, a dye, a dispersing agent, a thickening agent, and a leveling agent other than the above may also be added.

### (Copolymerizable Compound)

The coating agent of the present invention may comprise a copolymerizable compound in addition to the polymer (I).

The copolymerizable compound should be appropriately selected according to the purpose of adjusting the melting point, viscosity, refractive index, or the like, and is not particularly limited, but specifically the following are exemplified:

A (meth)acrylate such as methyl (meth)acrylate, benzyl (meth)acrylate, phenyl (meth)acrylate, bromophenyl (meth)acrylate, ethylene glycol di(meth)acrylate, cyclohexyl (meth)acrylate, or tris(2-(meth)acryloxyethyl) isocyanate; an allyl ester such as diallyl phthalate, diallyl isophthalate, diallyl terephthalate, diethylene glycol bisallyl carbonate, triallyl cyanurate, or triallyl isocyanurate; and an aromatic olefin such as styrene, chlorostyrene, or bromostyrene.

The proportion of the polymer (I) to the total amount of the copolymerizable compound other than the polymer (I) comprised in the coating agent of the present invention is preferably 30% by mass or more, and more preferably 50% by mass or more.

### (Polymerization Initiator)

The coating agent of the present invention may comprise a polymerization initiator. Here, as the polymerization reaction, a photopolymerization reaction, a thermal polymerization reaction, or the like is exemplified, and a photopolymerization reaction that has no thermal influence on a plastic substrate is preferred. As the light used in the photopolymerization reaction, ultraviolet rays or visible light is exemplified, and ultraviolet rays with a fast polymerization rate are preferred.

As the photopolymerization initiator, (a) a compound that generates a cationic species by light irradiation, and (b) a compound that generates an active radical species by light irradiation, or the like may be exemplified.

As the compound that generates a cationic species by light irradiation, for example, an onium salt in which the cationic moiety is a sulfonium, iodonium, diazonium, ammonium, or (2,4-cyclopentadien-1-yl)[(1-methylethyl)benzene]-Fe cation, and the anionic moiety is composed of BF₄⁻, PF₆⁻, SbF₆⁻, or [BX₄]⁻ (X represents a phenyl group substituted by at least two or more fluorines or a trifluoromethyl group) is exemplified.

Specifically, as the sulfonium salt, bis[4-(diphenylsulfonio)phenyl]sulfide bishexafluorophosphate, bis[4-(diphenylsulfonio)phenyl]sulfide bishexafluoroantimonate, bis[4-(diphenylsulfonio)phenyl]sulfide bistetrafluoroborate, bis[4-(diphenylsulfonio)phenyl]sulfide tetrakis(pentafluorophenyl)borate, diphenyl-4-(phenylthio)phenylsulfonium hexafluorophosphate, diphenyl-4-(phenylthio)phenylsulfonium hexafluoroantimonate, diphenyl-4-(phenylthio)phenylsulfonium tetrafluoroborate, diphenyl-4-(phenylthio)phenylsulfonium tetrakis(pentafluorophenyl)borate, triphenylsulfonium hexafluorophosphate, or the like is exemplified.

As the iodonium salt, diphenyliodonium hexafluorophosphate, diphenyliodonium hexafluoroantimonate, diphenyliodonium tetrafluoroborate, diphenyliodonium tetrakis(pentafluorophenyl)borate, bis(dodecylphenyl)iodonium hexafluorophosphate, bis(dodecylphenyl)iodonium hexafluoroantimonate, bis(dodecylphenyl)iodonium tetrafluoroborate, bis(dodecylphenyl)iodonium tetrakis(pentafluorophenyl)borate, or the like is exemplified.

As the diazonium salt, phenyldiazonium hexafluorophosphate, phenyldiazonium hexafluoroantimonate, phenyldiazonium tetrafluoroborate, phenyldiazonium tetrakis(pentafluorophenyl)borate, or the like is exemplified.

As the ammonium salt, 1-benzyl-2-cyanopyridinium hexafluorophosphate, 1-benzyl-2-cyanopyridinium hexafluoroantimonate, 1-benzyl-2-cyanopyridinium tetrafluoroborate, 1-benzyl-2-cyanopyridinium tetrakis(pentafluorophenyl)borate, 1-(naphthylmethyl)-2-cyanopyridinium hexafluorophosphate, 1-(naphthylmethyl)-2-cyanopyridinium hexafluoroantimonate, 1-(naphthylmethyl)-2-cyanopyridinium tetrafluoroborate, 1-(naphthylmethyl)-2-cyanopyridinium tetrakis(pentafluorophenyl)borate, or the like is exemplified.

As the (2,4-cyclopentadien-1-yl)[(1-methylethyl)benzene]-Fe salt, (2,4-cyclopentadien-1-yl)[(1-methylethyl)benzene]-Fe(II) hexafluorophosphate, (2,4-cyclopentadien-1-yl)[(1-methylethyl)benzene]-Fe(II) hexafluoroantimonate, (2,4-cyclopentadien-1-yl)[(1-methylethyl)benzene]-Fe(II) tetrafluoroborate, (2,4-cyclopentadien-1-yl)[(1-methylethyl)benzene]-Fe(II) tetrakis(pentafluorophenyl)borate, or the like is exemplified.

As the compound that generates an active radical species by light irradiation, specifically, acetophenone, acetophenone benzil ketal, 1-hydroxycyclohexyl phenyl ketone, 2,2-dimethoxy-1,2-diphenylethan-1-one, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, benzoin propyl ether, benzoin ethyl ether, benzil dimethyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholino-propan-1-one, 2-benzyl-2-dimethylamino-1-(4-morpholinophenyl)-butanone-1,4-(2-hydroxyethoxy)phenyl-(2-hydroxy-2-propyl) ketone, 2,4,6-trimethylbenzoyldiphenylphosphine oxide, bis-(2,6-dimethoxybenzoyl)-2,4,4-trimethylpentylphosphine oxide, oligo(2-hydroxy-2-methyl-1-(4-(1-methylvinyl)phenyl)propanone), or the like is exemplified.

The thermal polymerization initiator refers to a compound that generates a radical by heating, and an organic peroxide, an azo compound, and a redox initiator, or the like is exemplified.

For the blended amount of the polymerization initiator used in the present invention, 0.01 to 20% by mass of the polymerization initiator is preferably blended with respect to the total amount of all copolymerizable compounds other than the polymer (I), and 0.1 to 10% by mass is further preferred.

In the present invention, a sensitizer may be added as required. In addition to the above, additive components such as an ultraviolet absorbing agent, a dye, a rust preventive, and a preservative may be blended into the coating agent of the present invention as required, as long as the object of the present invention is not impaired.

### (Preparation of Coating Agent)

The coating agent in the present invention is usually prepared by mixing, in addition to the above polymer (I), the above condensate of the organosilane compound, photopolymerization initiator, metal compound, and the like as required, in an organic solvent. The solid content of the coating agent of the present invention is preferably 1 to 90% by mass, and more preferably 5 to 60% by mass.

### 2. Compact

The compact of the present invention is a compact in which a film (coating film) obtained by applying the coating agent containing the above polymer (I) to a plastic substrate, and curing the above coating agent is directly provided.

### [Substrate]

As the substrate on which the coating agent of the present invention may be used, a plastic substrate is preferred, and, for example, a cycloolefin resin, a polycarbonate resin, an acrylic resin, a polyimide resin, a polyester resin, an epoxy resin, a liquid crystal polymer resin, and a polyethersulfone are exemplified. Particularly a cycloolefin resin is preferably used.

### [Formation of Coating Film]

The coating film of the present invention may be formed through the step of applying the above-described coating agent to a substrate, drying it, and heating it as required, when the polymerization of a copolymerizable compound is not required.

When a copolymerizable compound is comprised, and a photopolymerization initiator is used, the coating film of the present invention may be formed through (A) the step of applying the above-described coating agent to a substrate, and drying it, and (B) the step of irradiating the coating agent with light comprising ultraviolet rays for photopolymerization to cure the coating agent. When a thermal polymerization initiator is used, thermal polymerization should be performed by heating instead of irradiating the coating agent with light in the above (B) step.

Further, when the condensate of the organosilane compound represented by formula (A) is comprised, the carbon atom content in the surface portion of the formed coating film is lower than the carbon atom content inside the coating film (in the vicinity of the bonding portion to the substrate), and a concentrated layer of the condensate of the organosilane compound may be formed on the surface of the coating film.

As the method for applying the coating agent, a known application method may be used, and a dipping method, a spraying method, a bar coating method, a roll coating method, a spin coating method, a curtain coating method, a gravure printing method, a silk screen method, an ink jet method, or the like is exemplified. The thickness of the formed coating film is not particularly limited, and is about 0.1 to 200 µm.

The drying treatment of the coating film is preferably performed at 40 to 200°C for about 0.5 to 120 minutes, and more preferably at 60 to 120°C for about 1 to 60 minutes.

The irradiation with ultraviolet rays may be performed using a known apparatus such as a high pressure mercury lamp, a low pressure mercury lamp, a metal halide lamp, or an excimer lamp.

### [Functional Film]

A functional film may be further provided on the coating film of the present invention as required.

The coating film of the present invention has very good adhesiveness to a plastic substrate, and therefore, the coating film of the present invention may be used as an adhesive layer or an intermediate layer. A functional film that may not be conventionally directly formed on a plastic substrate may be laminated via the coating film of the present invention. A plurality of layers may be laminated, and also a layer or layers may further be laminated by further applying the coating agent of the present invention to the plurality of layers.

As the functional film, a transparent conductive film and a gas barrier film are exemplified.

As the transparent conductive film, a film of indium oxide doped with tin (ITO film), a film of tin oxide doped with fluorine (FTO film), a film of zinc oxide doped with antimony, a film of zinc oxide doped with indium, or the like is exemplified.

The gas barrier film is not particularly limited as long as it has gas barrier properties against oxygen, water vapor, and the like, and the gas barrier film is preferably a thin film of an inorganic compound, and particularly a thin film of a metal oxide, a metal nitride, or a metal carbide having a metal element selected from the group consisting of titanium, zirconium, aluminum, silicon, germanium, indium, tin, tantalum, zinc, tungsten, and lead, or a composite thereof is preferred.

The thickness of these functional films is usually 10 to 300 nm, preferably 10 to 200 nm, and more preferably 10 to 100 nm.

For the method for forming a transparent conductive film or a gas barrier film consisting of an inorganic compound on the coating film of the present invention, the transparent conductive film or the gas barrier film may be formed by a known method, and the formation may be performed by a physical method such as a sputtering method, a vacuum deposition method, or an ion plating method, a chemical method such as a spraying method, a dipping method, a thermal CVD method, or a plasma CVD method, or the like.

For example, according to a sputtering method or the like, a film consisting of silicon oxide may also be formed by using as a target a sintered body obtained by sintering a silicon compound in the presence of oxygen gas, or the like, or a film may also be formed by reactively sputtering metal silicon as a target in the presence of oxygen. According to a plasma CVD method, a film consisting of silicon oxynitride on a substrate may be formed by supplying silane gas together with oxygen gas and nitrogen gas into a chamber in which a plasma is generated, to react them. According to a thermal CVD method or the like, a film consisting of silicon oxide may be formed by using as an evaporant an organic solvent solution containing a silicon compound, or the like.

In the present invention, the functional film is preferably formed particularly by a sputtering method, a vacuum deposition method, an ion plating method, or a plasma CVD method.

When the functional film is formed, the surface of the coating film of the present invention may be previously plasma-treated or UV-ozone-treated as required.

Examples will be shown below, but the technical scope of the present invention is not limited by these Examples.

### Examples

### (Example 1)

### 1. Synthesis of Trityl Methacrylate

Trityl chloride (20.00 g, 0.072 mol), triethylamine (12.34 g, 0.122 mol), and super-dehydrated tetrahydrofuran (168.89 g) were added to a 300 mL four-necked flask purged with nitrogen. The reaction solution was cooled to 10°C or less in an ice bath, and methacrylic acid chloride (9.88 g, 0.115 mol) was slowly dropped. Further, the temperature of the reaction solution was increased to room temperature, and the reaction was performed for 24 hours. After the completion of the reaction, the reaction solution was water-washed with saturated sodium bicarbonate water, and the THF in the organic layer was distilled off by an evaporator. Then, the residue was recrystallized with hexane to obtain 19.34 g (yield 82%) of trityl methacrylate.

The NMR data of the obtained trityl methacrylate are shown below:
¹H NMR (acetone-d₆, 500 MH, 300 K, TMS): 7.2-7.5, 6.2, 5.7, 1.9-2.0 ppm

### 2. Making of Poly(Trityl Methacrylate)

The polymer was made by a radical polymerization reaction using azobisisobutyronitrile (AIBN) as an initiator.

The trityl methacrylate (2.00 g, 0.006 mol) synthesized in Example 1 and AIBN (20 mg, 0.12 mmol) were added to a 50 mL Schlenk tube. A stirring bar was placed, and the Schlenk tube was sealed with a three-way cock, and then a gas sampling bag containing nitrogen was placed. The system was degassed by a vacuum pump, and then purged with nitrogen. Then, deoxygenated toluene (8.00 mL) was added, and the mixture was heated in an oil bath at 65°C for 24 hours for a radical polymerization reaction. After the completion of the reaction, the reaction liquid was added to methanol for reprecipitation. The precipitate was fractionated with a benzene/hexane mixed solvent to remove the oligomer to obtain the polymer as insoluble matter.

From GPC, the number average molecular weight (Mn) of the polymer was 39631 Da.

### 3. Preparation of Coating Agent

Poly(trityl methacrylate) (0.1 g) was dissolved in THF/cyclohexanone = 5/5 (v/v) (9.9 g) by heating to obtain a coating agent (A-1) having a solid concentration of 1 wt%.

### 4. Formation of Coating Film

A cycloolefin polymer (COP) film having a thickness of 188 µm (product name "ZEONOR Film ZF-16", manufactured by ZEON Corporation) was cut to 50 mm × 50 mm, and a film of the coating agent (A-1) was formed by bar coating. The coated film was dried (120°C for 3 minutes) in an oven to obtain a compact (A-2).

### (Example 2)

### 1. Synthesis of Tris(4-methylphenyl)methyl Methacrylate

Chlorotris(4-methylphenyl)methane (2.00 g, 0.006 mol), triethylamine (1.07 g, 0.011 mol), and super-dehydrated tetrahydrofuran (15.74 g) were added to a 100 mL four-necked flask purged with nitrogen. The reaction solution was cooled to 10°C or less in an ice bath, and methacrylic acid chloride (0.86 g, 0.010 mol) was slowly dropped. Further, the temperature of the reaction liquid was increased to room temperature, and the reaction was performed for 24 hours. After the completion of the reaction, the reaction solution was water-washed with saturated sodium bicarbonate water, and the THF in the organic layer was distilled off by an evaporator. Then, the residue was recrystallized with hexane to obtain tris(4-methylphenyl)methyl methacrylate (1.805 g, yield 78%).

The NMR data of the obtained tris(4-methylphenyl)methyl methacrylate are shown below: ¹H NMR (acetone-d₆, 500 MH, 300 K, TMS): 7.2-7.3, 7.1-7.15, 6.15-6.2, 5.6-5.7, 2.3, 1.9-2.0 ppm.

### 2. Making of Poly{tris(4-methylphenyl)methyl methacrylate}

The polymer was made by the same method as Example 1 except that tris(4-methylphenyl)methyl methacrylate (2.00 g, 0.005 mol) and AIBN (5.9 mg, 0.04 mmol) were used.

From GPC, the number average molecular weight (Mn) of the polymer was 42301 Da.

### 3. Preparation of Coating Agent

Poly{tris(4-methylphenyl)methyl methacrylate} (0.1 g) was dissolved in THF/cyclohexanone = 5/5 (v/v) (9.9 g) by heating to obtain a coating agent (B-1) having a solid concentration of 1 wt%.

### 4. Formation of Coating Film

Except that (B-1) was used for the coating agent, the same operation as Example 1 was performed to obtain a compact (B-2).

### (Example 3)

### 1. Synthesis of Tris(4-chlorophenyl)methyl Methacrylate

Chlorotris(4-chlorophenyl)methane (5.00 g, 0.013 mol), triethylamine (2.26 g, 0.022 mol), and super-dehydrated tetrahydrofuran (36.30 g) were added to a 100 mL four-necked flask purged with nitrogen. The reaction solution was cooled to 10°C or less in an ice bath, and methacrylic acid chloride (1.81 g, 0.021 mol) was slowly dropped. Further, the temperature of the reaction liquid was increased to room temperature, and the reaction was performed for 24 hours. After the completion of the reaction, the reaction solution was water-washed with saturated sodium bicarbonate water, and the THF in the organic layer was distilled off by an evaporator. Then, the residue was recrystallized with hexane to obtain tris(4-chlorophenyl)methyl methacrylate (4.58 g, yield 81%).

The NMR data of the obtained tris(4-chlorophenyl)methyl methacrylate are shown below: ¹H NMR (acetone-d₆, 500 MH, 300 K, TMS): 7.25-7.4, 6.08, 5.61, 1.90 ppm.

### 2. Preparation of Poly{tris(4-chlorophenyl)methyl methacrylate}

The polymer was made by the same method as Example 1 except that tris(4-chlorophenyl)methyl methacrylate (2.00 g, 0.005 mol) and AIBN (5.1 mg, 0.03 mmol) were used.

From GPC, the number average molecular weight (Mn) of the polymer was 47011 Da.

### 3. Making of Coating Agent

Poly{tris(4-chlorophenyl)methyl methacrylate} (0.1 g) was dissolved in THF/cyclohexanone = 5/5 (v/v) (9.9 g) by heating to obtain a coating agent (C-1) having a solid concentration of 1 wt%.

### 4. Formation of Coating Film

Except that (C-1) was used for the coating agent, the same operation as Example 1 was performed to obtain a compact (C-2).

### (Example 4)

### 1. Synthesis of Tris(3,5-dimethylphenyl)methyl Methacrylate

Chlorotris(3,5-dimethylphenyl)methane (5.00 g, 0.01381 mol), triethylamine (2.37 g, 0.02347 mol), and super-dehydrated tetrahydrofuran (37.11 g) were added to a 100 mL four-necked flask purged with nitrogen. The reaction solution was cooled to 10°C or less in an ice bath, and methacrylic acid chloride (1.90 g, 0.02209 mol) was slowly dropped. Further, the temperature of the reaction liquid was increased to room temperature, and the reaction was performed for 24 hours. After the completion of the reaction, the reaction solution was water-washed with saturated sodium bicarbonate water, and the THF in the organic layer was distilled off by an evaporator. Then, the residue was recrystallized with hexane to obtain tris(3,5-dimethylphenyl)methyl methacrylate (4.50 g, yield 79%) .

The NMR data of the obtained tris(3,5-dimethylphenyl)methyl methacrylate are shown below: ¹H NMR (acetone-d₆, 500 MH, 300 K, TMS) : 7.03, 6.75, 6.0, 5.6, 2.2, 1.9 ppm.

### 2. Making of Poly{tris(3,5-dimethylphenyl)methyl methacrylate}

The polymer was made by the same method as Example 1 except that tris(3,5-dimethylphenyl)methyl methacrylate (2.00 g, 0.00485 mol) and AIBN (4.0 mg, 0.024 mmol) were used. From GPC, the number average molecular weight (Mn) of the polymer was 48231 Da.

### 3. Preparation of Coating Agent

0.1 g of poly{tris(3,5-dimethylphenyl)methyl methacrylate} was dissolved in THF/cyclohexanone = 5/5 (v/v) (9.9 g) by heating to obtain a coating agent (D-1) having a solid concentration of 1 wt%.

### 4. Formation of Coating Film

Except that (D-1) was used for the coating agent, the same operation as Example 1 was performed to obtain a compact (D-2).

### (Evaluation of Adhesiveness)

For the compacts (A-2), (B-2), and (C-2) and the compact (D-2) obtained in the above Examples, a cross-cut peeling test was performed according to the cross-cut tape peeling test method described in JIS K-5400 (1999).

The coating film on each compact was cross-cut in the form of a grid of 1 mm × 1 mm squares, and a peeling test was performed using transparent adhesive tape. The results are shown in Table 1.

For all coating films, no peeling from the COP film was seen.

**[Table 1]**

| | A-2 | B-2 | C-2 | D-2 |
|---|---|---|---|---|
| Test result | 100/100 | 100/100 | 100/100 | 100/100 |

## Claims

1. A coating agent comprising a polymer consisting of only a repeating unit derived from a monomer represented by formula (I): 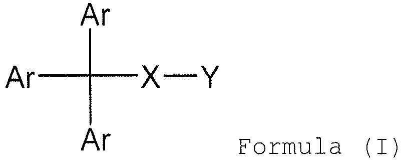 (wherein Ar represents a C6 to C10 aryl group optionally having a substituent and Ar is the same or different; X represents an oxygen atom or -NR-; R represents a hydrogen atom or a C1 to C6 alkyl group; and Y represents a polymerizable functional group.)

2. A coating agent comprising a homopolymer having a repeating unit derived from a monomer represented by formula (I): 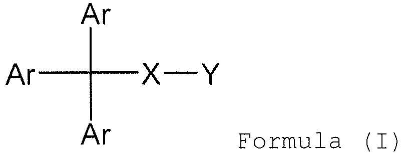 (wherein Ar represents a C6 to C10 aryl group optionally having a substituent and Ar is the same or different; X represents an oxygen atom or -NR-; R represents a hydrogen atom or a C1 to C6 alkyl group; and Y represents a polymerizable functional group.)

3. The coating agent according to claim 1 or 2, wherein in formula (I), Y is an acryloyl group or a methacryloyl group.

4. The coating agent according to any one of claims 1 to 3, wherein the coating agent is a coating agent onto a plastic substrate.

5. The coating agent according to claim 4, wherein the plastic substrate is a polyolefin resin substrate.
